# EUROPÄISCHE PATENTANMELDUNG

(11) **EP 2 028 046 A1**
(43) Veröffentlichungstag der Anmeldung: **25.02.2009**
(21) Anmeldenummer: 07016439.7
(22) Anmeldetag: 22.08.2007
(51) Int. Cl.: B60Q 1/32, B60Q 3/02, B60R 13/04, G09F 13/04, G09F 13/18, G02B 6/00, G09F 21/04

(54) **Dekorationskörper**

(71) Anmelder: CCL Design GmbH, 42653 Solingen (DE)
(72) Erfinder: Fleissner, Peter, 55232 Alzey (DE); Droste, Frank, 58332 Schwelm (DE); Kling, Reiner, 45259 Essen (DE)
(74) Vertreter: Paul, Dieter-Alfred

(57) **Zusammenfassung**

Die Erfindung betrifft einen Dekorationskörper mit beleuchtbaren Dekorelementen (1, 2, 3, 4), insbesondere eine Einstiegsleiste zur Anordnung an einer Karosserie eines Fahrzeuges, vorzugsweise im Bereich eines Einstiegsschwellers, umfassend eine Lichtleitschicht (5), in die durch ein seitlich angeordnetes Leuchtmittel (6) Licht einstrahlbar ist, eine über der Lichtieftschicht (5) angeordnete lichtabdeckende Dekorelementschicht (7) mit lichtundurchlässigen und -durchlässigen Bereichen, die entsprechend den Dekorelementen (1, 2, 3, 4) ausgebildet sind, und eine unter der Lichtleitschicht (5) angeordnete Reflexionsschicht (8). Zur Erhöhung der Gleichmäßigkeit der Ausleuchtung der Dekorelemente (1, 2, 3, 4) bei gleichzeitig hoher Lichtausbeute wird vorgeschlagen, dass die Reflexionsschicht (8) aus einer Vielzahl von Bildpunkten (9) gebildet ist.

## Beschreibung

Die Erfindung betrifft einen Dekorationskörper mit beleuchtbaren Dekorelementen, insbesondere eine Einstiegsleiste zur Anordnung an einer Karosserie eines Fahrzeuges, vorzugsweise im Bereich eines Einstiegsschwellers, umfassend eine Lichtleitschicht, in die durch ein seitlich angeordnetes Leuchtmittel Licht einstrahlbar ist, eine über der Lichtleitschicht angeordnete lichtabdeckende Dekorelementschicht mit lichtundurchlässigen und -durchlässigen Bereichen, die entsprechend den Dekorelementen ausgebildet sind, und eine unter der Lichtleitschicht angeordnete Reflexionsschicht.

Einen ähnlichen Gegenstand beschreibt das deutsche Gebrauchsmuster DE 202 19 391 U1. Es handelt sich dabei um eine Dekorationsleiste mit Symbolen, mit einem an der Karosserie eines Kraftfahrzeugs befestigbaren Trägerformteil, einer auf dem Trägerformteil angeordneten elektrolumineszierenden Leuchtfolie und einer mittel- oder unmittelbar auf die Leuchtfolie aufgebrachten lichtabdeckenden Symbolschicht mit lichtdurchlässigen Bereichen, die entsprechend den Symbolen als Dekorelemente ausgebildet sind. Diese bekannte Dekorationsleiste gestattet es, einen beleuchteten Schriftzug oder andere beleuchtete Symbole kostengünstig und rationell herstellbar auszubilden, wobei eine große Variabilität sowie ein gutes optisches Erscheinungsbild gegeben sind. Die Dekorationsleiste hat sich in der Praxis bewährt, unterscheidet sich jedoch von einem Dekorationskörper der eingangs genannten Art dadurch, dass sie keine Lichtleitschicht, in die durch ein seitlich angeordnetes Leuchtmittel Licht einstrahlbar ist, umfasst, sondern eine elektrolumineszierende Leuchtfolie.

Ein Dekorationskörper der eingangs genannten Art ist aus der US 2001/0040393 A1 bekannt. Dieses Dokument beschreibt eine Beleuchtungsplatte für ein Kraftfahrzeug, welche eine lichtleitende Platte und eine Abdeckung umfasst, in der sich zumindest ein lichtdurchlässiges Fenster befindet. Eine des Weiteren vorhandene Reflexionsschicht ist an der Rück- bzw. Unterseite der lichtleitenden Platte ausgebildet und besteht aus einer weißen, lichtreflektierenden Tinte, einer PVD- oder CVD-Schicht oder aus einem weißen Band. Alternativ kann diese Schicht auch durch Ätzen, Sandstrahlen oder Elektroerosion hergestellt werden. Die Reflexionsschicht ist geringfügig größer als das lichtdurchlässige Fenster ausgebildet. Sie erstreckt sich folglich nicht über die gesamte Rückseite der lichtleitenden Platte, sondern nur über bestimmte Bereiche derselben. Damit soll eine hohe Gleichmäßigkeit bei der Abstrahlung des Lichtes erreicht werden, was jedoch insbesondere bei großflächigen Beleuchtungsplatten nicht vollständig gelingt. Es zeigt sich vielmehr nachteiligerweise, dass die Intensität des durch das mindestens eine Fenster bzw. durch mehrere vorhandene Fenster abgestrahlten Lichtes mit zunehmendem Abstand vom Leuchtmittel schwächer wird.

Der vorliegenden Erfindung liegt die Aufgabe zugrunde, einen Dekorationskörper der eingangs genannten Art mit einer gleichmäßigeren Intensitätsverteilung des abgestrahlten Lichts anzugeben, wobei Letzteres insbesondere auch bei größeren Flächen, d. h. mit einem Flächeninhalt von mehr als 100 cm² gewährleistet sein soll.

Erfindungsgemäß wird dies durch einen Dekorationskörper der eingangs genannten Art erreicht, bei dem die Reflexionsschicht aus einer Vielzahl von Bildpunkten gebildet ist. Die Dichte, Größe und/oder Lichtreflektivität der Bildpunkte kann dabei insbesondere variieren.

Durch die Erfindung wird nicht nur erreicht, dass - wie im Stand der Technik bekannt - das Licht entweder aus der Lichtleitschicht optisch ausgekoppelt, d. h. zum Abstrahlen gebracht, werden kann oder nicht, sondern es gelingt vorteilhafterweise darüber hinaus, die Intensität der Lichtabstrahlung gezielt steuern zu können.

So kann mit Vorteil beispielsweise vorgesehen sein, dass die Dichte, Größe und/oder Lichtreflektivität der Bildpunkte in Abhängigkeit von ihrem Abstand zum Leuchtmittel eingestellt ist bzw. sind, insbesondere bei größerem Abstand vom Leuchtmittel größer ist/sind als bei kleinerem Abstand vom Leuchtmittel. Auch eine Einstellung in Abhängigkeit von der Winkellage der Bildpunkte zum Leuchtmittel, von der Helligkeit des Leuchtmittels, vom Werkstoff und/oder von der Geometrie der Lichtleitschicht, wie deren Länge, Breite und Dicke, ist mit Vorteil möglich.

Dabei kann sich der Fächendeckungsgrad der Bildpunkte bevorzugt im Bereich von 20 bis 80 Prozent bewegen. Damit die - zwar in diskretisierter Form vorliegenden - Änderungen von Dichte, Größe und/oder Lichtreflektivität der Bildpunkte vom Auge als quasikontinuierlich erfasst werden, ist es dabei von Vorteil, wenn die Rasterdichte der Bildpunkte mindestens 18 pro cm beträgt. Eine höhere Rasterdichte als 120 pro cm erscheint nicht sinnvoll, weil der technologische Aufwand zur Herstellung des Rasters überproportional zur erzielten optischen Güte bzw. Homogenität der Ausleuchtung anwachsen würde. Vorzugsweise sollte das Raster der Bildpunkte unter diesen Aspekten im Bereich von 36 bis 80 pro cm liegen.

Weitere vorteilhafte Ausgestaltungsmerkmale der Erfindung sind in den Unteransprüchen sowie der folgenden Beschreibung enthalten.

Anhand eines in der Zeichnung dargestellten, bevorzugten Ausführungsbeispiels soll im Folgenden die Erfindung näher erläutert werden.

Dabei zeigen:
- Fig. 1: eine perspektivische Explosionsdarstellung einer ersten Ausführungs- form eines erfindungsgemäßen Dekorationskörpers mit beleuchtbaren Dekorelementen,
- Fig. 2: eine perspektivische Explosionsdarstellung einer zweiten Ausführungs- form eines erfindungsgemäßen Dekorationskörpers,
- Fig. 3: in vergrößerter Aufsicht eine Einzeldarstellung einer Reflexionsschicht eines erfindungsgemäßen Dekorationskörpers,
- Fig. 4: in vergrößerter perspektivischer Querschnittsansicht, eine schematisierte Darstellung eines Ausschnitts aus einer alternativ ausgebildeten Lichtleit- schicht eines erfindungsgemäßen Dekorationskörpers.

In den verschiedenen Figuren der Zeichnung sind gleiche Teile stets auch mit den gleichen Bezugszeichen versehen, so dass sie in der Regel auch jeweils nur einmal beschrieben werden.

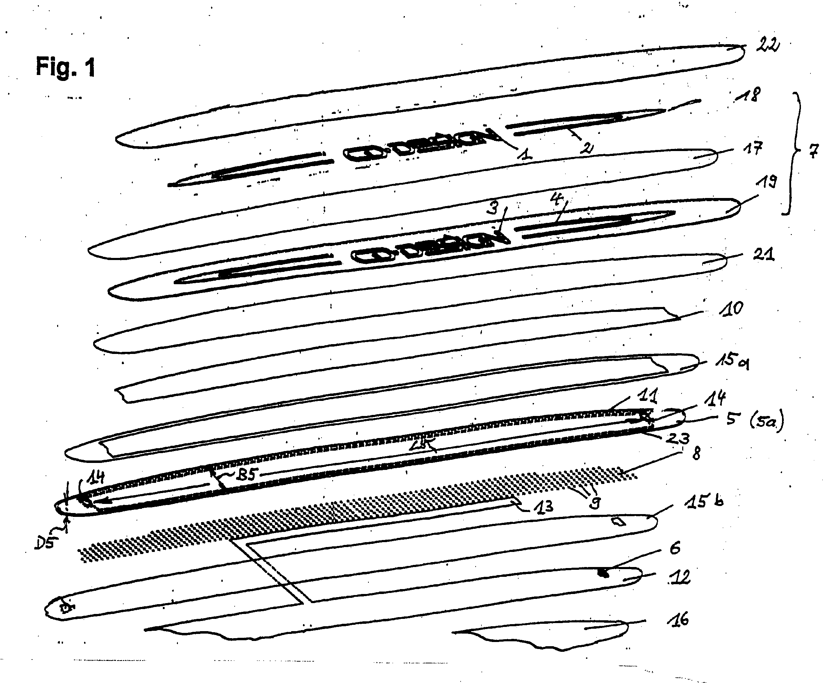

Fig. 1 zeigt zunächst einen erfindungsgemäßen Dekorationskörper, welcher beleuchtbare Dekorelemente 1, 2, 3, 4 aufweist. Diese sind beispielsweise jeweils als Schriftzug "CD-DESIGN" 1, 3 und als sichelförmiges Schmuckomament 2, 4 ausgebildet.

Bei dem erfindungsgemäßen Dekorationskörper kann es sich insbesondere um eine Einstiegsleiste zur Anordnung an einer Karosserie eines Fahrzeuges, vorzugsweise im Bereich eines Einstiegsschwellers, handeln.

Wie dargestellt, umfasst der erfindungsgemäße Dekorationskörper eine Lichtleitschicht 5, in die durch ein seitlich angeordnetes Leuchtmittel 6 Licht einstrahlbar ist. Bei dem Leuchtmittel 6 kann es sich dabei bevorzugt um eine um eine - oder wie dargestellt um zwei - oder mehr lichtemittierende Dioden (LED) handeln.

Der erfindungsgemäße Dekorationskörper umfasst des Weiteren eine über der Lichtleitschicht 5 angeordnete, aus mehreren - nachstehend noch im Detail erläuterten - Teilschichten bestehende lichtabdeckende Dekorelementschicht 7 mit lichtundurchlässigen und -durchlässigen Bereichen, die entsprechend den Dekorelementen 1, 2, 3, 4 ausgebildet sind, sowie eine unter der Lichtleitschicht 5 angeordnete Reflexionsschicht 8.

Erfindungsgemäß ist die Reflexionsschicht 8 aus einer Vielzahl von Bildpunkten 9 unterschiedlicher Dichte, Größe und/oder Lichtreflektivität gebildet. Dabei ist es vorteilhafterweise möglich, bei geringem Lichtverlust die zur Beleuchtung der Dekorelemente 1, 2, 3, 4 nach oben ausgekoppelte Lichtintensität zu steuern und bezogen auf die Fläche des erfindungsgemäßen Dekorationskörpers äußerst gleichmäßig zu gestalten. Dazu kann z. B. auch ein Flächendeckungsgrad der Bildpunkte 9 gezielt, vorzugsweise im Bereich von 20 bis 80 Prozent, variiert werden. Somit ist es problemlos möglich, mit nur - wie dargestellt - zwei diametral einander gegenüber liegenden LED's eine Fläche von mindestens 150 cm² gleichmäßig auszuleuchten.

Die Reflexionsschicht 8 kann insbesondere aus einer auf die Unterseite der Lichtleitschicht 5 aufgebrachten Druckschicht, vorzugsweise aus einer im Siebdruckverfahren aufgebrachten Druckschicht, oder auch durch eine Gravur in der Lichtleitschicht 5 gebildet sein.

Obwohl es bevorzugt ist, im Falle eines Druckes wegen der vorteilhaft geringen Lichtabsorption weiße Farbe einzusetzen, könnte die Lichtreflektivität - außer durch eine Dicke der Druckschicht - auch durch einen von Weiß abweichenden Farbton gesteuert werden.

Ein Raster der Bildpunkte 9 kann entsprechend dem physiologischen Auflösungsvermögen des menschlichen Auges und entsprechend dem bevorzugten Einsatzfall des erfindungsgemäßen Dekorationskörpers festgelegt werden. Da das Auge in einem Betrachtungsabstand von etwa einem halben Meter noch Strukturen bis zu 0,3 mm auflösen kann, sollte das Raster der Bildpunkte 9 im Bereich von 18 bis 120 pro cm, vorzugsweise im Bereich von 36 bis 80 pro cm, liegen.

Zur Steuerung einer - auf die zeichnerische Darstellung bezogen nach oben - ausgekoppelten Lichtmenge bzw. Intensität kann vorgesehen sein, dass die Dichte, Größe und/oder Lichtreflektivität der Bildpunkte 9 in Abhängigkeit von der Geometrie der Lichtleitschicht 5, wie deren (optisch wirksamer) Länge L5, Breite B5 und Dicke D5, eingestellt ist. Außerdem ist es auch möglich, die Dichte, Größe und/oder Lichtreflektivität der Bildpunkte 9 auf die optischen Eigenschaften des Werkstoffes der Lichtleitschicht 5, wie dessen Absorptionsvermögen oder Brechungsindex, abzustimmen.

Ebenso kann des Weiteren der Helligkeit des Leuchtmittels 6 Rechnung getragen werden, indem die Dichte, Größe und/oder Lichtreflektivität der Bildpunkte bei größerer Helligkeit geringer gewählt werden kann als bei geringerer Helligkeit.

Auch kann die Dichte, Größe und/oder Lichtreflektivität der Bildpunkte 9 unterhalb der lichtundurchlässigen Bereiche der lichtabdeckenden Dekorelementschicht 7 geringer sein als unterhalb der lichtdurchlässigen Bereiche, wobei - einem nicht senkrechten Austreten des Lichtes entsprechend - auch ein die lichtdurchlässigen Bereiche umgebender abgedeckter Rand eine vergleichsweise höhere Dichte, Größe und/oder Lichtreflektivität der Bildpunkte 9 aufweisen kann als die übrige abgedeckte Umgebung.

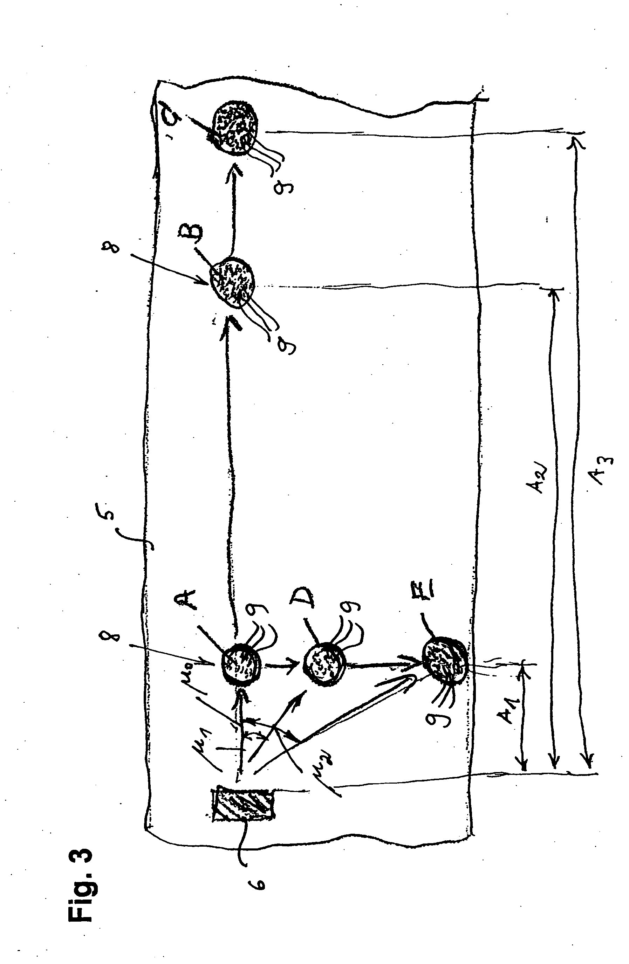

Schließlich bestehen noch weitere Möglichkeiten zur Steuerung des abgestrahlten Lichtes, die durch Fig. 3 veranschaulicht werden. So kann mit Vorteil vorgesehen sein, dass die Dichte, Größe und/oder Lichtreflektivität der Bildpunkte 9 der ausschnittsweise dargestellten Reflexionsschicht 8 in Abhängigkeit von ihrem Abstand A₁, A₂, A₃ zum Leuchtmittel 6 eingestellt sind, insbesondere bei größerem Abstand A₂ (Bereiche B und C), A₃ vom Leuchtmittel 6 größer ist als bei kleinerem Abstand A₁ (Bereiche A, D, E) vom Leuchtmittel 6.

Falls es sich aber bei dem Bereich C um einen abgedeckten Bereich handelt, könnten dort - wie bereits ausgeführt - trotz des größeren Abstands (A₃ > A₂) die Dichte, Größe und/oder Lichtreflektivität der Bildpunkte 9 kleiner sein als im Bereich B, wenn dieser kein abgedeckter Bereich ist.

Fig. 3 zeigt auch, dass es mit Vorteil möglich ist, die Dichte, Größe und/oder Lichtreflektivität der Bildpunkte 9 in Abhängigkeit von ihrer Winkellage zum Leuchtmittel 6 einzustellen, wobei diese insbesondere bei einer größeren Winkellage µ₂ von der senkrechten Abstrahlungsrichtung des Leuchtmittels 6 (im Bereich E) größer sein sollte als bei einer kleineren Winkellage µ₁ zur Abstrahlungsrichtung des Leuchtmittels 6 (Bereich D) oder direkt in Abstrahlungsrichtung (Bereich A).

Falls es sich aber beispielsweise bei dem Bereich A um einen abgedeckten Bereich handelt, könnten dort trotz der Winkellage µ₀ = 0° die Dichte, Größe und/oder Lichtreflektivität der Bildpunkte 9 größer sein als im Bereich D, wenn dieser kein abgedeckter Bereich ist.

Zur noch weiter gehenden Verbesserung der Lichtabstrahlung im Sinne einer gleichmäßigeren Intensitätsverteilung des abgestrahlten Licht ist zwischen der Lichtleitschicht 5 und der darüber angeordneten lichtabdeckenden Dekorelementschicht 7 eine lichtdurchlässige Streuschicht 10 angeordnet. Diese Streuschicht 10 verhindert, dass das Raster der Bildpunkte 9 in der Draufsicht sichtbar ist, und gleichzeitig wird damit auch vermieden, dass sich durch eine Interferenz an dünnen Schichten Newtonsche Ringe bilden können. Zu diesem Zweck weist die lichtdurchlässige Streuschicht 10 insbesondere einen arithmetischen Mittenrauhwert Rₐ von 5,0 bis 20,0 µm, vorzugsweise von 8,0 bis 14,0 µm, auf. Optimale Ergebnisse wurden bei einem Mittenrauhwert Rₐ von 11,7 µm erzielt.

Die lichtdurchlässige Streuschicht 10 sollte im Sinne einer hohen Lichtausbeute für die Illuminierung der Dekorelemente 1, 2, 3, 4 einen Transmissionsgrad von mindestens 0,5, vorzugsweise von mindestens 0,8 aufweisen. Dabei beruht ihre Wirkung weniger auf einer Eintrübung, als vielmehr auf einer Lichtstreuung, d. h. das Licht erhält beim Durchgang durch die Streuschicht 10 einen Strahlengang mit einem hohen Anteil ungerichteter, diffuser Strahlungskomponenten.

Zur Bildung der lichtdurchlässigen Streuschicht 10 ist es in technologisch wenig aufwändiger Weise mit Vorteil möglich, einen Ätzimitatlack einzusetzen, der auf die Lichtleitschicht 5 aufgetragen werden kann. Die lichtdurchlässige Streuschicht 10 kann dabei eine grobe Fraktion von Partikeln mit einer mittleren Korngröße im Bereich von 30 bis 120 µm, vorzugsweise von 60 bis 90 µm, enthalten. Außerdem kann vorgesehen sein, dass die lichtdurchlässige Streuschicht eine feine Fraktion von Partikeln mit einer mittleren Korngröße im Bereich von weniger als 15 µm enthält.

Die feine Fraktion wiederum kann bevorzugt ein Gemisch aus einer ersten Teilfraktion von Partikeln mit einer mittleren Korngröße im Bereich von 1,8 bis 2,4 µm und aus einer zweiten Teilfraktion von Partikeln mit einer mittleren Korngröße im Bereich von 8,0 bis 12,0 µm sein, wobei die feine Fraktion insbesondere ein Gemisch aus 35 bis 65 Teilen der ersten Teilfraktion und 65 bis 35 Teilen der zweiten Teilfraktion ist und vorzugsweise je zur Hälfte aus den beiden Teilfraktionen besteht.

Insgesamt kann dann mit Vorteil vorgesehen sein, dass die lichtdurchlässige Streuschicht zu 60 bis 95 Prozent, vorzugsweise zu 78 bis 93 Prozent, aus einem Lack, zu 2,5 bis 20 Prozent aus der groben Fraktion von Partikeln mit einer mittleren Korngröße im Bereich von 30 bis 120 µm und zu 2,5 bis 20 Prozent aus der feinen Fraktion von Partikeln mit einer mittleren Korngröße im Bereich von weniger als 15 µm besteht.

Einerseits kann auf diese Weise der gewünschte Effekt erreicht, jedoch die Einstellung einer unerwünscht hohen Opazität und das Auftreten von Opaleszenz gänzlich vermieden werden.

Optimale Ergebnisse wurden mit einer Rezeptur erreicht, die zu 88 Prozent aus einem Ätzimitatlack, zu 6 Prozent aus einer ersten Pigmentfraktion mit einer - wie hier als üblich angenommen normalverteilten - Korngröße im Bereich von 60 bis 90 µm und zu weiteren 6 Prozent aus einer zweiten Pigmentfraktion bestand, die jeweils zu gleichen Teilen aus einer ersten Teilfraktion mit einer mittleren Korngröße von 2,1 µm und einer zweiten Teilfraktion mit einer mittleren Korngröße von 10,0 µm bestand. Der Auftrag erfolgte im Siebdruck mit einem 43er Gewebe (43 x 43 Maschen pro cm²).

Die Lichtleitschicht 5 und die lichtabdeckende Dekorelementschicht 7 können - wie in Fig. 1 dargestellt - mit Vorteil durch Kleben, insbesondere mittels einer, vorzugsweise ausschließlich am Rand (an der Lichtleitschicht 5 mit dem Bezugszeichen 11 bezeichnet) unter Einfassung der Streuschicht angeordneten, doppeltwirkenden Selbstklebefolie 15a, verbunden werden.

Unter der Lichtleitschicht 5 kann, wie gezeigt, ein flexibler Leiter 12 (Flexible Printed Circuit - FPC) angeordnet sein, der insbesondere einen nahtlos abgehenden Anschlussleiter 13 aufweist. Der flexible Leiter 12 kann, vorzugsweise auf seiner Oberfläche, mit allen zur Illuminierung erforderlichen Bauteilen, insbesondere mit dem Leuchtmittel 6, wie einer oder mehreren lichtemittierenden Dioden (LED), bestückt sein. Bis auf die LED's können diese Bauteile aber auch an anderer Stelle, z. B. an einem nicht dargestellten Verbindungsstecker, untergebracht werden.

Die Lichtleitschicht 5 kann wiederum in komplementärer Weise Aufnahmetaschen 14 für die zur Illuminierung erforderlichen Bauteile, insbesondere für das bzw. die Leuchtmittel 6 aufweisen. Dabei können die zur Illuminierung erforderlichen Bauteile, wie die dargestellten lichtemittierenden Dioden 6, in die Lichtleitschicht 5 mittels eines transparenten Vergussmaterials eingegossen sein. Lichtleiter und Bauelemente werden dadurch zu einer Einheit verbunden.

Die Lichtleitschicht 5 und der flexible Leiter 12 sind mit Vorteil durch Kleben, insbesondere mittels einer vollflächig auf der Lichtleitschicht 5 und dem flexiblen Leiter 12 aufliegenden doppeltwirkenden Selbstklebefolie 15b, verbindbar.

Unterseitig des erfindungsgemäßen Dekorationskörpers kann zur Verbindung mit der Karosserie des Fahrzeuges, insbesondere an der Unterseite des flexiblen Leiters 12, eine weitere Klebeschicht 16, vorzugsweise eine selbstklebende Schaumstoff-Klebefolie, angeordnet sein.

Die Lichtleitschicht 5 und die lichtabdeckende Dekorelementschicht 7 sowie gegebenenfalls der flexible Leiter 12 und die Klebeschichten 15a, 15b, 16 können insbesondere kongruent oder zumindest mit gleicher Außenkontur ausgebildet sein.

Durch die vorstehend genannten technischen Merkmale werden vorteilhafterweise potentielle Eindringstellen für Feuchtigkeit direkt ausgeschlossen und somit ein wirksamer Schutz gegen Feuchte und auch gegen Erschütterungen erzielt.

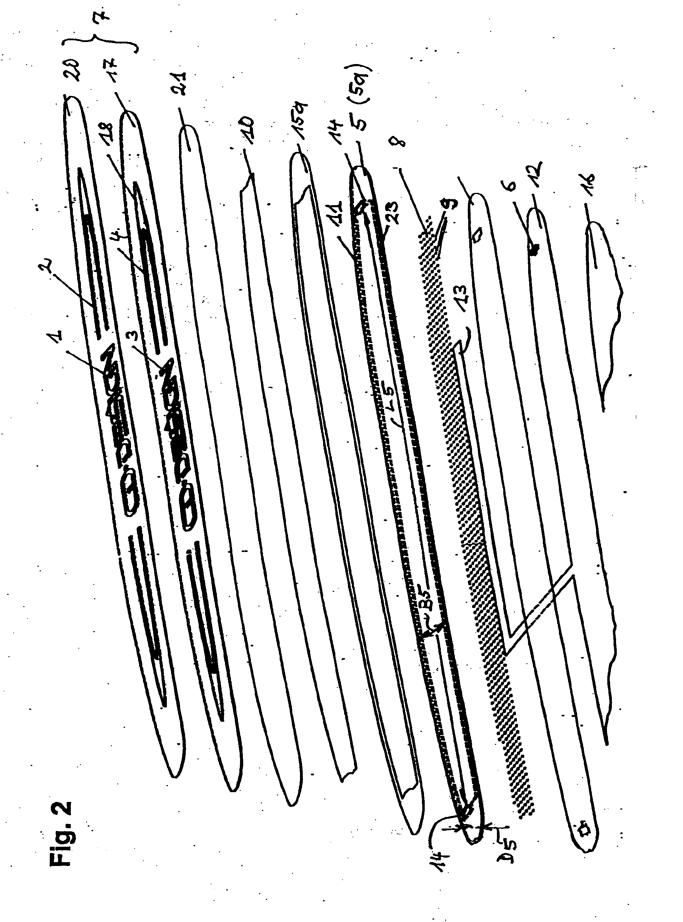

Die über der Lichtleitschicht 5 angeordnete lichtabdeckende Dekorelementschicht 7 kann - wie bereits erwähnt - aus mehreren Teilschichten bestehen. Hierbei ist ein unterschiedlicher Aufbau möglich, durch den sich das in Fig. 1 dargestellte Ausführungsbeispiel der Erfindung von dem in Fig. 2 dargestellten Beispiel unterscheidet.

Sowohl in Fig. 1 als auch in Fig. 2 umfasst die lichtabdeckende Dekorelementschicht 7 eine - es könnten auch zwei oder mehr sein - durchsichtige Kunststoff-Teilschicht 17, die beispielsweise aus Polymethacrylsäuremethylester (PMMA) bestehen kann.

In der Ausführung gemäß Fig. 1 sind die lichtundurchlässigen Bereiche der lichtabdeckenden Dekorelementschicht 7 durch zwei in unterschiedlichen Ebenen auf der Kunststoff-Teilschicht 17 aufgebrachte Druckschichten 18, 19 gebildet. Eine erste Druckschicht 18 ist auf die Oberseite der Kunststoff-Teilschicht 17, eine zweite Druckschicht 19 auf deren Unterseite aufgebracht. Wie bereits dargestellt, können mit den Dekorelementen 1, 2, 3, 4 unterschiedliche Motive dadurch erreicht werden, dass bestimmte Bereiche abgedeckt sind und andere nicht. Die nicht abgedeckten Bereiche werden durchleuchtet. Durch das Aufbringen von Abdeckschichten in unterschiedlichen Ebenen, wie der beiden Druckschichten 18, 19 kann dabei vorteilhafterweise beim Betrachter ein plastisch wirkender Eindruck, also ein sogenannter 3D-Effekt, erzielt werden.

Alternativ oder zusätzlich können - wie in Fig. 2 dargestellt - die lichtundurchlässigen Bereiche der lichtabdeckenden Dekorelementschicht 7 auch durch eine, insbesondere aus Metall, wie Aluminium, bestehende Auflageschicht 20 gebildet sein. Die Auflageschicht 20 kann dabei bevorzugt eine Dicke von etwa 0,3 bis 1,0 mm aufweisen. Das Abdecken kann also durch ein nicht transparentes Material erfolgen und/oder durch ein Material, welches ursprünglich transparent ist und durch Bearbeitung, z. B. durch Farbauftrag, seine Transparenz verliert.

Durch eine zusätzlich optional vorhandene lasierende Farbschicht 21 (für beide Ausführungsformen dargestellt), die auf die lichtabdeckende Dekorelementschicht 7, insbesondere auf deren Unterseite, aufgebracht ist, können beliebige Licht-Farbtöne dargestellt werden.

Schließlich kann, wie Fig. 1 zeigt, der erfindungsgemäße Dekorationskörper eine zumindest oberseitig angeordnete lichtdurchlässige Schutzschicht 22 aufweisen, die vorzugsweise durch eine die Oberfläche abdeckende Vergussmasse oder ein Harz, das insbesondere aus Polyurethan oder Acrylat bestehen kann, gebildet ist. Der Überzug kann beispielsweise mit einer Schichtdicke von etwa 0,15 bis 2,0 mm aufgetragen sein und auch aus zwei unter Aushärtung miteinander reagierenden Komponenten bestehen, wie dies z. B. bei Epoxidharzen der Fall ist. Die Schutzschicht 22 kann auch die Seitenkanten des Dekorationskörpers bedecken.

Was die Lichtleitschicht 5 betrifft, so ist diese mit Vorteil derart aufgebaut, dass sie nahezu vollständig von der Umgebung optisch entkoppelt ist und dadurch nur marginale Lichtverluste durch Streulicht erfährt. In den in Fig. 1 und 2 dargestellten Ausführungen der Erfindung ist die Lichtleitschicht 5 aus einer lichtleitenden Platte 5a gebildet, deren Dicke D5 etwa im Bereich von 0,5 bis 10 mm liegen kann. Hierbei kann nun zur Erzielung einer optimalen optischen Entkopplung vorgesehen sein, dass die lichtleitende Platte 5a in ihrer Deckfläche eine am Rand 11 ausgebildete, vorzugsweise nahezu vollständig umlaufende, Nut 23 aufweist, deren Tiefe insbesondere 80 bis 95 Prozent der Dicke D5 der Lichtleitschicht 5, vorzugsweise aber mindestens 0,2 mm, beträgt.

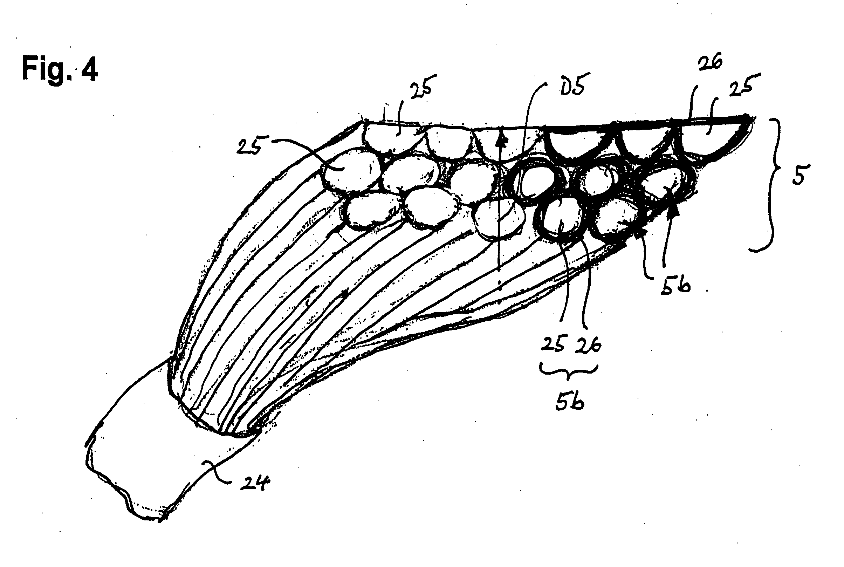

In einer alternativ ausgebildeten Lichtleitschicht 5 eines erfindungsgemäßen Dekorationskörpers, wie sie Fig. 4 zeigt, kann auch vorgesehen sein, dass diese Lichtleitschicht 5 aus einem, insbesondere flächig aufgefächerten, Bündel von Lichtleitfasern 5b gebildet ist, die in einer Lage oder in mehreren Lagen übereinander angeordnet sind. Die Dicke D5 der Schicht 5 kann dabei kleiner sein als bei einer Platte 5a und etwa eine Untergrenze im Bereich von 0,15 mm haben.

Die Lichtleitfasern 5b münden in der dargestellten Ausführung in ein Lichtleitkabel, bei dem es sich beispielsweise um ein Glasfaserkabel 24 handeln kann. Derartige Glasfaserkabel 24 sind üblicherweise aus hochtransparenten Glasfasern gebildet, die zumeist aus hochreinem Kieselglas bestehen und mit einem Glas niedrigerer Brechung ummantelt sind. Die Lichtleitfaser 5b selbst besteht aus einem Kern (Core) 25, einem Mantel (Cladding) 26 und gegebenenfalls einer Schutzbeschichtung (Coating und/oder Buffer).

Der lichtführende Kern 25 dient z. B. zum Übertragen eines optischen Signals. Der Mantel 26 hat eine niedrigere optische Brechzahl als der Kern 25 und bewirkt dadurch eine Totalreflexion an der Grenzschicht und somit eine vorwiegende Führung der Strahlung im Kern 25 des Lichtwellenleiters. Ein Teil der Lichtwelle tritt auch im Mantel 26 auf, nicht jedoch an dessen Außenoberfläche.

Die äußere Beschichtung bildet einen Schutz vor mechanischen Beschädigungen und besteht meist aus einer 150 - 500 µm dicken Lackierung aus speziellem Kunststoff (meist Polyimid, Acryl oder Silikon), die die Faser 5b auch vor Feuchtigkeit schützt. Ohne die Beschichtung würden die auf der Faseroberfläche vorhandenen Mikrorisse zu einer erheblichen Verringerung der mechanischen Belastbarkeit führen.

Während in der rechten Hälfte der zeichnerischen Darstellung dieser vollständige Aufbau der Lichtleitfasern 5b vorliegt, zeigt die linke Hälfte einen Faseraufbau, bei dem der Mantel 26 bzw. die äußere Beschichtung entfernt ist. Dadurch tritt keine Totalreflexion mehr auf und das Licht kann aus der Lichtleitfaser 5b heraus abgestrahlt, also zur Illuminierung der Dekorelementschicht 7 optisch ausgekoppelt, werden.

Wie bereits aus den vorstehenden Erläuterungen hervorgeht, ist die Erfindung nicht auf die dargestellten Ausführungsbeispiele beschränkt, sondern umfasst auch alle im Sinne der Erfindung gleichwirkenden Ausführungen. So muss es sich bei den Bildpunkten 9 nicht zwangsläufig um kreisförmige Bildelemente handeln, sondern die "Punkte" können z. B. auch eine ovale oder eckige Form bzw. Kreuz- oder andere Form aufweisen. Die Reflexionsschicht 8 und die Streuschicht 10 müssen nicht zwangsläufig durch einen Druckprozess aufgebracht werden, sondern könnten wie dies eingangs bei der Darstellung des bekannten Standes der Technik ausgeführt wurde, durch ein anderes geeignetes Verfahren erzeugt werden, wie z. B. durch Lasern, Gravur oder Fräsen. Beim Einsatz von Lichtleitfasern 5b können solche aus verschiedenartigem Material, von verschiedenartiger Stärke und mit verschiedenartigem Querschnitt Verwendung finden, wie in Fig. 4 schon durch die Darstellung von Lichtleitfasern 5b mit einem D- und einem O-Querschnitt angedeutet ist. Hierbei erscheint auch ein Vergießen der Fasern grundsätzlich möglich.

Der erfindungsgemäße Dekorationskörper kann auch geometrisch verschieden von den dargestellten Ausführungsbeispielen ausgebildet sein. So kann es sich beispielsweise auch um einen Würfel, eine Kugel oder ein anderes dreidimensionales Objekt handeln.

Der Anwendungsbereich des erfindungsgemäßen Dekorationskörpers beschränkt sich nicht auf die Kraftfahrzeugtechnik, sondern kann mit Vorteil auch in der Möbelindustrie, im architektonischen Bereich, in der Werbung oder auf weiteren geeigneten Gebieten liegen.

Ferner ist die Erfindung nicht auf die im Anspruch 1 definierte Merkmalskombination beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

### Bezugszeichen

- 1, 2, 3, 4: Dekorelemente
- 5: Lichtleitschicht
- 5a: Platte von 5
- 5b: Lichtleitfaser von 5
- 6: Leuchtmittel, LED
- 7: Dekorelementschicht mit 1, 2, 3, 4
- 8: Reflexionsschicht
- 9: Bildpunkt in 8
- 10: Streuschicht
- 11: Rand von 5
- 12: flexibler Leiter (FPC)
- 13: Anschlussleiter von 12
- 14: Aufnahmetasche für 6 in 5
- 15a, 15b: Klebeschichten (Selbstklebefolien)
- 16: Schaumstoff-Klebefolie
- 17: durchsichtige Teilschicht von 7
- 18, 19: Druckschichten von 7
- 20: Auflageschicht von 7
- 21: Farbschicht
- 22: Schutzschicht
- 23: Nut in 5
- 24: Glasfaserkabel
- 25: Kern (Core) von 5b
- 26: Mantel von 5b

- A, B, C, D, E: Bereiche in 8
- A₁, A₂, A₃: (senkrechte) Abstände zwischen A, B, C, D, E und 6
- B5: Breite von 5
- D5: Dicke von 5
- L5: (optisch wirksame) Länge von 5
- µ₀: senkrechte Abstrahlungsrichtung von 6
- µ₁: Winkellage von D zu µ₀
- µ₂: Winkellage von E zu µ₀

## Patentansprüche

1. Dekorationskörper mit beleuchtbaren Dekorelementen (1, 2, 3, 4), insbesondere Einstiegsleiste zur Anordnung an einer Karosserie eines Fahrzeuges, vorzugsweise im Bereich eines Einstiegsschwellers, umfassend eine Lichtleitschicht (5), in die durch ein seitlich angeordnetes Leuchtmittel (6), insbesondere mindestens eine lichtemittierende Diode (LED), Licht einstrahlbar ist, eine über der Lichtleitschicht (5) angeordnete lichtabdeckende Dekorelementschicht (7) mit lichtundurchlässigen und -durchlässigen Bereichen, die entsprechend den Dekorelementen (1, 2, 3, 4) ausgebildet sind, und eine unter der Lichtleitschicht (5) angeordnete Reflexionsschicht (8), **dadurch gekennzeichnet, dass** die Reflexionsschicht (8) aus einer Vielzahl von Bildpunkten (9) gebildet ist.

2. Dekorationskörper nach Anspruch 1, **dadurch gekennzeichnet, dass** die Bildpunkte (9) eine unterschiedliche Dichte, Größe und/oder Lichtreflektivität aufweisen.

3. Dekorationskörper nach Anspruch 1 oder 2, **dadurch gekennzeichnet, dass** Dichte, Größe und/oder Lichtreflektivität der Bildpunkte (9)
- in Abhängigkeit von ihrem Abstand (A₁, A₂, A₃) zum Leuchtmittel (6) eingestellt sind, insbesondere bei größerem Abstand (A₂, A₃) vom Leuchtmittel (6) größer ist/sind als bei kleinerem Abstand (A₁, A₂) vom Leuchtmittel (6), und/oder
- in Abhängigkeit von ihrer Winkellage (µ₀, µ₁, µ₂) zum Leuchtmittel (6) eingestellt ist/sind, insbesondere bei einer größeren Winkellage (µ₂) in Bezug auf die senkrechte Abstrahlungsrichtung (µ₀) des Leuchtmittels (6) größer ist/sind als bei einer kleineren Winkellage (µ₁) in Bezug auf die senkrechte Abstrahlungsrichtung (µ₀) des Leuchtmittels (6), und/oder
- in Abhängigkeit von der Helligkeit des Leuchtmittels (6) eingestellt ist/sind, insbesondere bei größerer Helligkeit geringer ist/sind als bei geringerer Helligkeit, und/oder
- in Abhängigkeit von der Geometrie der Lichtleitschicht (5), wie deren Länge (L5), Breite (B5) und Dicke (D5), eingestellt ist/sind, und/oder
- in Abhängigkeit von den optischen Eigenschaften des Werkstoffes der Lichtleitschicht (5), wie dessen Absorptionsvermögen oder Brechungsindex, eingestellt ist/sind.

4. Dekorationskörper nach einem der Ansprüche 1 bis 3, **dadurch gekennzeichnet, dass** Dichte, Größe und/oder Lichtreflektivität der Bildpunkte (9) unterhalb der lichtundurchlässigen Bereiche der lichtabdeckenden Dekorelementschicht (7) geringer ist/sind als unterhalb der lichtdurchlässigen Bereiche (5) der Dekorelementschicht (7).

5. Dekorationskörper nach einem der Ansprüche 1 bis 4, **dadurch gekennzeichnet, dass** ein Raster der Bildpunkte (9) im Bereich von 18 bis 120 pro cm, vorzugsweise im Bereich von 36 bis 80 pro cm, liegt und/oder
ein Flächendeckungsgrad der Bildpunkte (9) im Bereich von 20 bis 80 Prozent variiert.

6. Dekorationskörper nach einem der Ansprüche 1 bis 5, **dadurch gekennzeichnet, dass** die Reflexionsschicht (8) aus einer auf die Unterseite der Lichtleitschicht (5) aufgebrachten Druckschicht, insbesondere aus einer im Siebdruckverfahren aufgebrachten Druckschicht, oder durch eine Gravur in der Lichtleitschicht (5) gebildet ist.

7. Dekorationskörper nach einem der Ansprüche 1 bis 6, **dadurch gekennzeichnet, dass** zwischen der Lichtleitschicht (5) und der darüber angeordneten lichtabdeckenden Dekorelementschicht (7) eine lichtdurchlässige Streuschicht (10) angeordnet ist, die insbesondere einen Transmissionsgrad von mindestens 0,5, vorzugsweise von mindestens 0,8 aufweist, und/oder
einen arithmetischen Mittenrauhwert (Rₐ) von 5,0 bis 20,0 µm, vorzugsweise von 8,0 bis 14,0 µm, aufweist, und/oder
aus einem Ätzimitatlack gebildet ist.

8. Dekorationskörper nach einem der Ansprüche 1 bis 7, **dadurch gekennzeichnet, dass** die lichtdurchlässige Streuschicht eine grobe Fraktion von Partikeln mit einer mittleren Korngröße im Bereich von 30 bis 120 µm, vorzugsweise von 60 bis 90 µm enthält, und/oder
eine feine Fraktion von Partikeln mit einer mittleren Korngröße im Bereich von weniger als 15 µm enthält,
und insbesondere die feine Fraktion von Partikeln mit einer mittleren Korngröße im Bereich von weniger als 15 µm insbesondere ein Gemisch aus einer ersten Teilfraktion von Partikeln mit einer mittleren Korngröße im Bereich von 1,8 bis 2,4 µm und aus einer zweiten Teilfraktion von Partikeln mit einer mittleren Korngröße im Bereich von 8,0 bis 12,0 µm ist,
wobei die feine Fraktion von Partikeln mit einer mittleren Korngröße im Bereich von weniger als 15 µm insbesondere aus einem Gemisch aus 35 bis 65 Teilen der ersten Teilfraktion und 65 bis 36 Teilen der zweiten Teilfraktion, vorzugsweise zu je 50% aus den beiden Teilfraktionen, besteht.

9. Dekorationskörper nach Anspruch 8, **dadurch gekennzeichnet, dass** die lichtdurchlässige Streuschicht (10) zu 60 bis 95 Prozent, vorzugsweise zu 78 bis 93 Prozent, aus einem Lack, zu 2,5 bis 20 Prozent aus einer/der groben Fraktion von Partikeln mit einer mittleren Korngröße im Bereich von 30 bis 120 µm und zu 2,5 bis 20 Prozent aus einer/der feinen Fraktion von Partikeln mit einer mittleren Korngröße im Bereich von weniger als 15 µm besteht.

10. Dekorationskörper nach einem der Ansprüche 1 bis 9, **dadurch gekennzeichnet, dass** die Lichtleitschicht (5) und die lichtabdeckende Dekorelementschicht (7) durch Kleben, insbesondere mittels einer, vorzugsweise ausschließlich randseitig (11) unter Einfassung der Streuschicht (10) ang e-ordneten, doppeltwirkenden Selbstklebefolie (15a), verbunden sind.

11. Dekorationskörper nach einem der Ansprüche 1 bis 10, **dadurch gekennzeichnet, dass** unter der Lichtleitschicht (5) ein flexibler Leiter (12) angeordnet ist, der insbesondere einen nahtlos abgehenden Anschlussleiter (13) aufweist und/oder
vorzugsweise auf seiner Oberfläche, mit allen zur Illuminierung erforderlichen Bauteilen, insbesondere mit dem Leuchtmittel (6), wie einer/der lichtemittierenden Diode (LED), bestückt ist, wobei
die Lichtleitschicht (5) und der flexible Leiter (12) insbesondere durch Kleben, beispielsweise mittels einer vollflächig auf der Lichtleitschicht (5) und dem flexiblen Leiter (12) aufliegenden doppeltwirkenden Selbstklebefolie, (15b) verbunden sind.

12. Dekorationskörper nach einem der Ansprüche 1 bis 11, **dadurch gekennzeichnet, dass** die Lichtleitschicht (5) Aufnahmeteaschen (14) zur Illuminierung erforderliche Bauteile, insbesondere für das Leuchtmittel (6) aufweist, und/oder zumindest das Leuchtmittel (6) in die Lichtleitschicht (5) mittels eines transparenten Vergussmaterials eingegossen ist.

13. Dekorationskörper nach einem der Ansprüche 1 bis 12, **gekennzeichnet durch** eine unterseitig, insbesondere an der Unterseite des flexiblen Leiters (6) angeordnete Klebeschicht (16), vorzugsweise eine selbstklebende Schaumstoff-Klebefolie, zur Verbindung mit der Karosserie des Fahrzeuges.

14. Dekorationskörper nach einem der Ansprüche 1 bis 13, **dadurch gekennzeichnet, dass** die lichtabdeckende Dekorelementschicht (7) eine oder mehr durchsichtige Kunststoff-Teilschicht(en), wie aus Polymethacrylsäuremethylester (PMMA), umfasst, und/oder eine lasierende Farbschicht (21) auf die lichtabdeckende Dekorelementschicht (7) insbesondere auf deren Unterseite aufgebracht ist.

15. Dekorationskörper nach einem der Ansprüche 1 bis 14, **dadurch gekennzeichnet, dass** die lichtundurchlässigen Bereiche der lichtabdeckenden Dekorelementschicht (7) durch eine Druckschicht (18, 19) oder mehrere, insbesondere in unterschiedlichen Ebenen auf der/den Kuststoff-Teilschicht(en) Druckschichten (18, 19) und/oder durch eine, insbesondere aus Metall, wie Aluminium, bestehende Auflageschicht (20) oder durch eine insbesondere aus Metall, wie Aluminium, bestehende Auflageschicht (20) gebildet ist/sind.

16. Dekorationskörper nach einem der Ansprüche 1 bis 15, **dadurch gekennzeichnet, dass** die Lichtleitschicht (5) eine Dicke (D5) im Bereich von 0,15 bis 10,0 mm aufweist.

17. Dekorationskörper nach einem der Ansprüche 1 bis 16, **dadurch gekennzeichnet, dass** die Lichtleitschicht (5) aus einer lichtleitenden Platte (5a) gebildet ist, die insbesondere so ausgebildet ist, dass sie in ihrer Deckfläche eine am Rand (11) ausgebildete, vorzugsweise nahezu vollständig umlaufende, Nut (23) aufweist, deren Tiefe insbesondere 80 bis 95 Prozent der Dicke (D) der Lichtleitschicht (5), vorzugsweise mindestens aber 0,2 mm, beträgt
die Lichtleitschicht (5) aus einem insbesondere flächig aufgefächerten Bündel von Lichtleitfasern (5b) gebildet ist und/oder
die Lichtleitschicht (5) bzw. die lichtleitende Platte (5a) oder die Lichtleitfasern insbesondere aus einem lichtleitenden Kern (25) und einem Mantel (26) besteht, wobei der Mantel (26) in Bereichen, in den eine Lichtabstrahlung erfolgen soll, entfernt ist.

18. Dekorationskörper nach einem der Ansprüche 1 bis 17, **dadurch gekennzeichnet, dass** die Lichtleitschicht (5) und die lichtabdeckende Dekorelementschicht (7) sowie gegebenenfalls der flexible Leiter (12) und die Klebeschichten (15a, 15b, 16) kongruent oder zumindest mit gleicher Außenkontur ausgebildet sind.

19. Dekorationskörper nach einem der Ansprüche 1 bis 18, **gekennzeichnet durch** eine zumindest obenseitig angeordnete lichtdurchlässige Schutzschicht (22), die vorzugsweise **durch** eine die Oberfläche abdeckende Vergussmasse oder ein Harz, insbesondere aus Polyurethan oder Acrylat, gebildet ist.
